# EUROPÄISCHE PATENTANMELDUNG

(11) **EP 0 532 881 A2**
(43) Veröffentlichungstag der Anmeldung: **24.03.1993**
(21) Anmeldenummer: 92113319.5
(22) Anmeldetag: 05.08.1992
(51) Int. Cl.: H01R 25/14, H02G 5/06

(54) **Vorrichtung zur elektrischen Verbindung von parallel angeordneten Stromschienen**

(30) Priorität: 17.09.1991 DE 4130882
(71) Anmelder: Klöckner-Moeller GmbH, D-53115 Bonn (DE)
(72) Erfinder: Audehm, Karsten, W-2165 Harsefeld (DE); Ammann, Eckhard, W-5206 Seelscheid (DE)

(57) **Zusammenfassung**

In der Energieverteilung im Niederspannungsbereich sind Verbindungselemente bei Schienenverteilern bekannt mit denen zwar eine Richtungsänderung des Schienenkanals realisierbar ist, der Stromstärke jedoch grenzen gesetzt sind. Die neue Vorrichtung soll in einfacher Weise eine Richtungsänderung auch für hohe Ströme ermöglichen.
Dies wird dadurch erreicht, daß die Stromschienen in der Verbindungsstelle um ein gemeinsames Spannelement drehbar angeordnet sind.

## Beschreibung

Die Erfindung betrifft eine Vorrichtung zur elektrischen Verbindung von parallel angeordneten Stromschienen nach dem Oberbegriff des Anspruches 1.

Bei dem Einsatz von Schienenverteilern besteht häufig das Problem, daß aufgrund von Gebäudeunebenheiten diese mit flexiblen Verbindungsteilen versehen werden müssen, beispielsweise wenn die Stromschienen entlang einer Wand geführt werden müssen, die unter einem Winkel weiterverläuft.

Bekannt sind Verbindungsteile für Stromentnahmeschienen mit flexiblen Verbindungsleitungen, bei dem der Mantel mit Rippen versehen ist, um eine optische Fortsetzung der Konturen zu bilden.
Eine derartige Vorrichtung ist in der DE-OS 27 43 424 gezeigt und beschrieben. Für hohe Ströme, insbesondere für mehrere hundert oder gar tausend Ampère, ist diese allerdings nicht geeignet. Nachteilig ist auch, daß die Verbindungsteile an den Endabschnitten gestützt werden müssen.

Eine weitere in der DE-AS 1255761 gezeigte und beschriebene Verbindungseinheit zur Verbindung zweier Verteilerkanäle, mit der Richtungsänderungen bewirkt werden können, bestehend aus einem flexiblen Hüllrohr, in dem isolierte Kabel verlegt und geführt sind. Diese ist allerdings für hohe Ströme nicht geeignet.

Eine andere in der FR-OS 89 03 170 gezeigte und beschriebene Verbindungseinheit besteht aus einem aus Kettengliedern zusammengesetzten Hüllrohr mit innenliegenden flexiblen Leitungen, wobei die Kettenglieder gegeneinander um eine Achse drehbar sind. Diese Verbindungseinheit ist jedoch für höhere Ströme ungeeignet.

Aus der US 34 59 874 ist es bekannt, Stromschienen um einen gemeinsamen Schraubenbolzen drehbar anzuordnen. Das Gehäuse ist aber an dieser Stelle konstruktiv aufwendig und zudem für hohe Schutzarten nicht geeignet.

Aufgabe der Erfindung ist es deshalb, eine Vorrichtung nach dem Oberbegriff des Anspruches 1 zu schaffen, welche auf einfache Weise für Schienenverteiler eine einstellbare Richtungsänderung ermöglicht.

Die Aufgabe der Erfindung wird durch die kennzeichnenden Merkmale des Anspruches 1 gelöst, während in den Ansprüchen 2 bis 10 besonders vorteilhafte Weiterbildungen der Erfindung gekennzeichnet sind.

Aus den charakteristischen Merkmalen des Anspruches 2 wird eine besonders günstige Isolierung geschaffen, die durch den Anspruch 3 weiter verbessert wird. Der Spalt, der zwischen den Isolierscheiben entsteht, kann dabei so klein ausgeführt sein, daß eine hohe Schutzart erreicht wird.

Durch den Anspruch 4 wird die Anzahl der benötigten Isolierscheiben reduziert.

Durch die Merkmale des Anspruches 5 wird eine günstige Befestigung der drehbaren Isolierteile geschaffen.

Durch den Anspruch 6 wird der Übergang von dem zylinderförmigen Gehäuse zu dem Schienenkanal, bzw. des Schienengehäuses besonders gut isoliert.

Durch die Ansprüche 7 und 8 wird die elektrische und mechanische Verbindung der Stromschienen in einfacher Weise verbessert.

Die Verwendung von gleichen Isolierscheiben wird durch die Merkmale des Anspruches 9 möglich.

Eine besonders hohe Schutzart wird durch Anspruch 10 erreicht.

Es ist zwar bekannt (US 34 59 872, US 30 04 097), einen rings um die Schienenkontur hochgezogenen Rand der Isolierscheiben vorzusehen. Dieser bildet jedoch nicht das Gehäuse. Ebenso bekannt ist aus diesen Schriften, die gegenseitige Beweglichkeit der den beiden miteinander verbundenen Stromschienenenden zugeordneten Isolierscheiben. Hier ist jedoch keine Drehbeweglichkeit, sondern eine Linearbewegung vorgesehen.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine perspektivische Darstellung der erfindungsgemäßen Vorrichtung,
- Fig. 2: eine auseinandergezogene Darstellung der in Fig. 1 dargestellten Vorrichtung,
- Fig. 3a: eine Darstellung einer Stromschiene in Aufsicht,
- Fig.3b: eine Darstellung der Stromschiene in Seitenansicht,
- Fig.3c: eine weitere Seitenansicht dieser Stromschiene,
- Fig.4a: eine perspektivische Darstellung der als Abschlußelement dienenden Isolierscheibe,
- Fig.4b: eine weitere perspektivische Darstellung dieser Isolierscheibe,
- Fig.5a: eine zwischenliegende Isolierscheibe in perspektivischer Dartellung,
- Fig.5b: eine weitere perspektivische Darstellung dieser Isolierscheibe,
- Fig.6a: eine Seitenansicht des Bolzens,
- Fig.6b: eine Aufsicht des Bolzens und
- Fig.7: eine Darstellung des Mitnehmers.

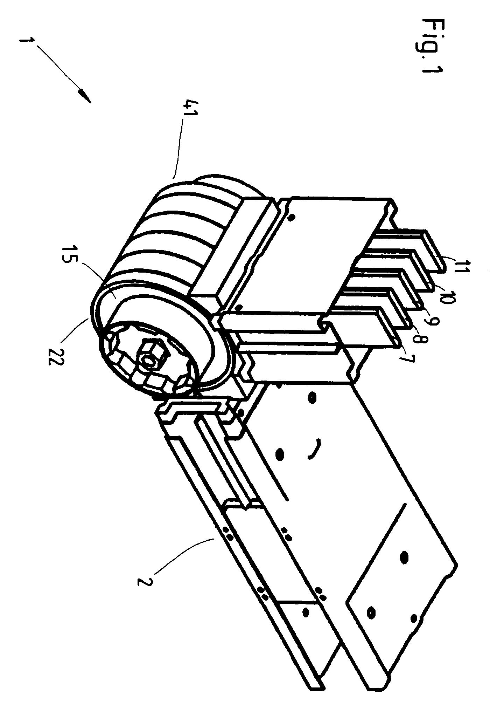

Die Fig.1 zeigt die erfindungsgemäße Vorrichtung mit einem eingestellten Winkel von 90°.
Die Vorrichtung besteht aus zuführenden Stromschienen, die in der Fig.1 mit der Bezugsziffer 2 nur angedeutet sind, und abgehenden Stromschienen 7 bis 11.

Im Grunde spielt es keine Rolle, welche der Stromschienen die zuführenden oder die abgehenden sind, es soll aber hier in diesem Beispiel aus Anschaulichkeitsgründen diese Reihenfolge berücksichtigt werden. Ebenso soll angenommen werden, daß die zuführenden Stromschienen 2 bis 6 feststehen, während die abgehenden Stromschienen 7 bis 11 beweglich angeordnet sind.

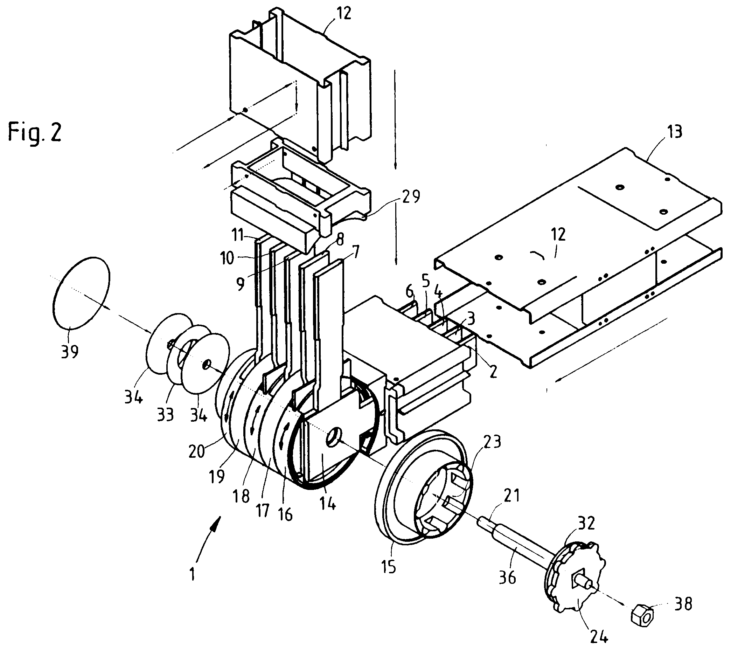

Wie insbesondere in Fig.2 zu erkennen ist, ist das Gehäuse 12 der Stromschienen 2 bis 6 in der Vorrichtung 1 fortgeführt. Die Stromschienen 2 bis 6 sind in bekannter Weise elektrisch und mechanisch mit dem Schienenabschnitt 13 weiterverbunden.

Die Stromschiene 2 endet in einer Isolierscheibe 15, die in der Fig.2 auseinandergezogen dargestellt ist. Die Stromschiene 2 ist, wie alle anderen Stromschienen der Vorrichtung auch, mit einer Flächenvergrößerung 14 versehen, die vollständig in der Isolierscheibe 15 eingebettet ist und der Kontaktverbesserung dient.

Die Stromschiene 2 korrespondiert mit der Stromschiene 7, die drehbar angeordnet ist.

Die Isolierscheibe 15 ist unverdrehbar wie die Stromschiene 2 angeordnet, während die mit der Stromschiene 7 korrespondierenden Isolierscheibe 16 der Drehbewegung der Stromschiene 7 folgt.
Sowohl beide Stromschienen 2 und 7 als auch beide Isolierscheiben 15 und 16 sind um einen für alle Stromschienen 2 bis 11 und Isolierscheiben 15 bis 20 gemeinsamen Bolzen 21 gegeneinander drehbar angeordnet.

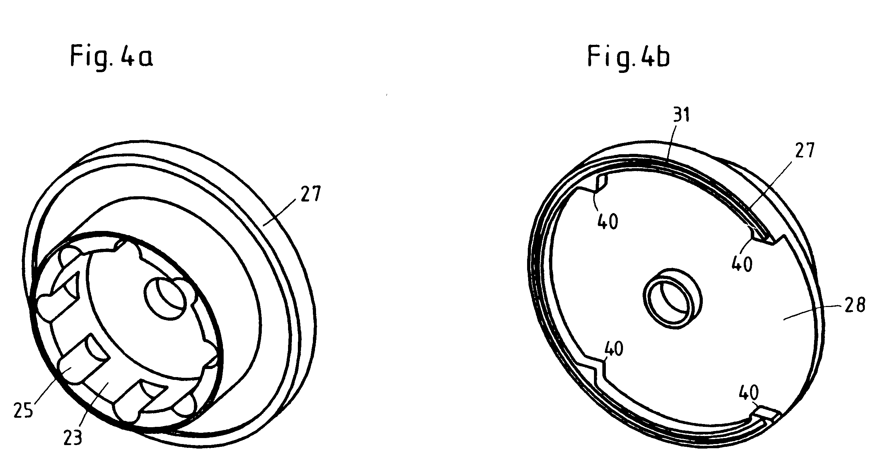

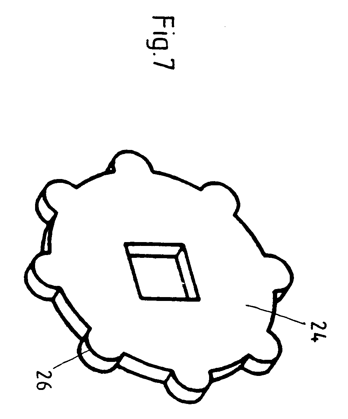

An der der Stromschiene 2 gegenüberliegenden Seite der Isolierscheibe 16 ist eine weitere Stromschiene 8 angeordnet, so daß diese innenliegende Isolierscheibe 16 zwei Stromschienen 7 und 8 beinhaltet.
Die Isolierscheibe 15 ist gleichzeitig Abschlußelement des zylinderförmigen Gelenkes 22, wie insbesondere in Fig.1 zu sehen ist. Diese weist an der der Stromschiene 2 gegenüberliegenden Seite eine Aufnahme 23 auf, die einen Mitnehmer 24 unverdrehbar aufnimmt. Dies wird durch Aussparungen 25 und Vorsprünge 26, wie aus den Figuren 4a und 7 zu erkennen ist, erreicht.

Auf die Klemmfunktion wird später im einzelnen eingegangen. Die der Isolierscheibe 16 benachbarte Isolierscheibe 17 korrespondiert mit den Stromschienen 3 und 4. Diese ist wie auch die Isolierscheibe 19 und die Stromschienen 5 und 6 fest angeordnet, wie aus Anschaulichkeitsgründen angenommen wurde. Die Isolierscheibe 18, die mit den Stromschienen 9 und 10 korrespondiert, ist, wie die als Endabschnitt dienende Isolierscheibe 20, drehbar angeordnet, wobei die Isolierscheibe 20 mit der Stromschiene 11 korrespondiert.

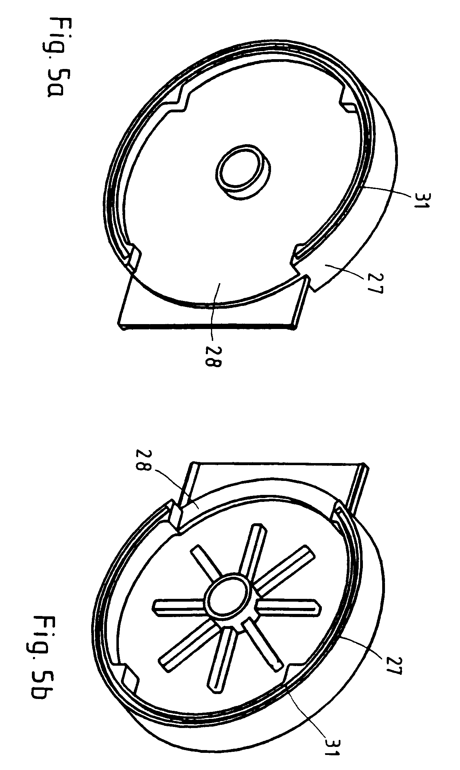

Die Isolierscheiben 15 bis 20 sind randseitig mit hochgezogenen Bereichen 27, wie aus den Figuren 4a,4b,5a,5b ersichtlich, versehen, so daß, wenn die Isolierscheiben 15 bis 20 aneinandergesetzt sind, diese in einfacher Weise ein Gehäuse 41 bilden.

Die Stromschienen 2 bis 11 sind aus Ausbrüchen 28 herausgeführt, die vollständig durch Isolierhauben 29 abgedeckt werden.

Um den Kontakt der Stromschienen 2 bis 11 nicht zu beeinträchtigen, sind die Isolierscheiben derart bemessen, daß im zusammengesetzten Zustand ein geringer Spalt zwischen diesen noch vorhanden ist.
Die hochgezogenen Bereiche 27 sind mit einer Aussparung 31 für die Aufnahme von Dichtungsmitteln vorgesehen, so daß dieser Spalt abgedichtet ist und die Vorrichtung eine hohe Schutzart aufweist.

In der Aufnahme 23 ist noch unter den Mitnehmer 24 eine Tellerfeder 32 angeordnet, die in Verbindung mit einer Tellerfeder 33 am gegenüberliegenden Bolzenende, begleitet von zwei Unterlegscheiben 34, für die nötige Vorspannkraft Sorge trägt.

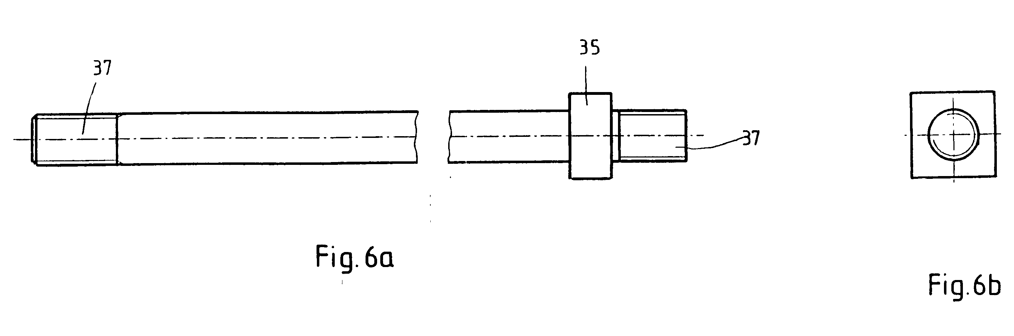

Der Bolzen 21, wie aus den Figuren 6a, 6b ersichtlich, weist eine quadratische Querschnittsvergrößerung 35 für den Mitnehmer 24 und an jedem Ende ein Gewinde 37 für die Befestigung mittels Muttern 38 auf. Die Befestigung kann dabei in der Weise abgestimmt sein, daß eine definierte Vorspannkraft an der dem Deckel 39 zugehörigen Seite vom Werk eingestellt wird und der Kunde nur die Mutter 38 bis zu einem Anschlag verschrauben muß. Der Bolzen ist ferner mit einem Isolierrohr 36 versehen, der in der Fig.2 dargestellt ist.

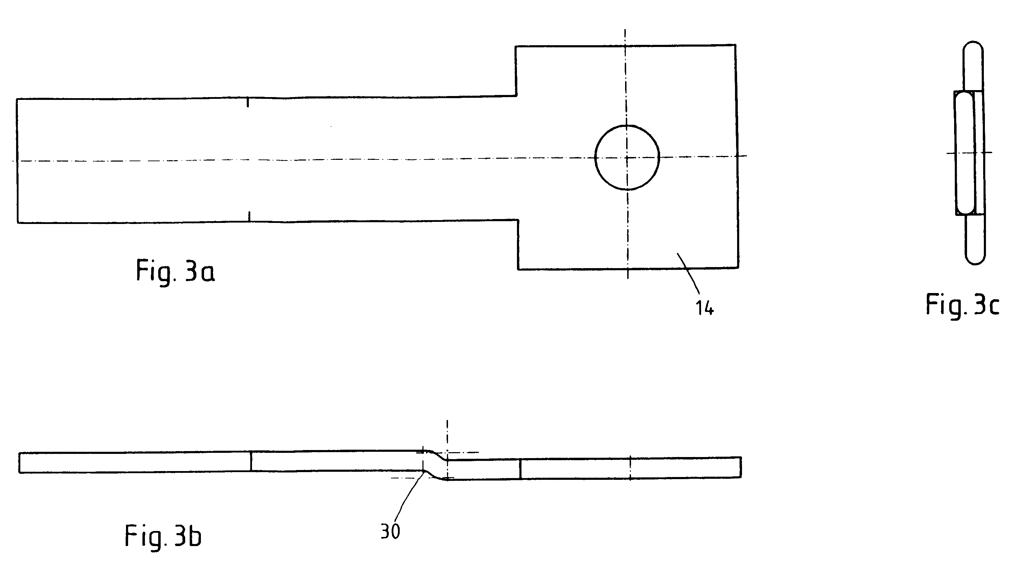

Wie aus den Figuren 3b, 3c zu sehen ist, weisen die Stromschienen 2 bis 11 eine Abkröpfung auf, damit wieder ein regelmäßiger Abstand zwischen den Stromschienen 2 bis 11 erfolgt.
Die Flächenvergrößerung 14 ist quadratisch ausgebildet und wird mittels an den Isolierscheiben 15 bis 20 vorhandenen Vorsprüngen 40 fixiert, die in Fig. 4b zu sehen sind.

Eine weitere mögliche Ausführungsform, die hier aber nicht zeichnerisch dargestellt ist, wäre die Aussparung 31 vollständig über den vollen Kreisumfang auszubilden, wobei weitere Kontakt- und Isolierelemente vorhanden sein müßten.

Mit der Vorrichtung lassen sich beliebige Einstellungen in einem Bereich von etwa 270° vornehmen.

Als Einstellhilfe kann eine Einstellskala vorhanden sein.

Die Isolierhauben sind mit einem dem Gehäuse des Schienenkanals angepaßten und einen dem zylinderförmigen Gehäuse angepaßten Bereich versehen, so daß ein isolierter Übergang zwischen beiden Gehäusen geschaffen wird.

## Patentansprüche

1. Vorrichtung zur elektrischen Verbindung von parallel angeordneten Stromschienen bei Schienenverteilern mit einem gemeinsamen Spannelement in Form eines Schraubenbolzens, bei der die Stromschienen in der Verbindungsstelle um das gemeinsame Spannelement drehbar angeordnet sind, **dadurch gekennzeichnet**, daß zwischen den Stromschienen (2 bis 11) gegeneinander drehbare Isolierscheiben (15 bis 20) angeordnet sind, die derart nach außen ausgebildet sind, daß diese ein die Stromschienen (2 bis 11) schützendes Gehäuse (41) bilden, wobei die zuführenden und abgehenden Stromschienen (2 bis 11) scharnierartig drehbar angeordnet sind.

2. Vorrichtung nach Anspruch, dadurch gekennzeichnet, daß jeweils eine zuführende Stromschiene (2,3,4,5,6) einer Isolierscheibe (15,17,19) zugeordnet, und daß die abgehende Stromschiene (7,8,9,10,11) einer weiteren Isolierscheibe (16,18,20) zugeordnet ist, die gegenüber der zuführenden Stromschiene (2,3,4,5,6) und der zu dieser korrespondierende Isolierscheibe (15,17,19) drehbar ist.

3. Vorrichtung nach einem der Anspruch 1 oder 2, dadurch gekennzeichnet, daß die Isolierscheiben (15 bis 20) randseitig hochgezogen sind und im zusammengesetzten Zustand ein zylinderförmiges Gehäuse (41) bilden, und daß die Isolierscheiben (15 bis 20) einen Ausbruch (28) für das Herausführen der Stromschienen (2 bis 11) aufweisen.

4. Vorrichtung nach einem der Ansprüche 1 bis 3, dadurch gekennzeichnet, daß die innenliegengen Isolierscheiben (16,17,18,19) für zwei Stromschienen (3 bis 10) als gemeinsame Isolierscheiben (16,17,18,19) ausgebildet sind, wobei eine Seite dieser Isolierscheiben (16,17,18,19) einer Stromschiene (7,8,3,4,9,10,5,6) zugeordnet ist.

5. Vorrichtung nach einem der Ansprüche 1 bis 4, dadurch gekennzeichnet, daß eine Isolierscheibe (15), die als Abschlußelement vorgesehen ist, eine Aufnahme (23) für einen Mitnehmer (24) aufweist, der unverdrehbar in dieser eingebettet und fest mit dem Bolzen (21) verbunden ist.

6. Vorrichtung nach einem der Ansprüche 1 bis 5, dadurch gekennzeichnet, daß in den Bereichen, an den die Stromschienen (2 bis 11) aus dem zylinderförmigen Gehäuse (40) herausgeführt sind, Isolierhauben (29) vorgesehen sind, die einen isolierten Übergang der Stromschienen (2 bis 11) in den Schienenkanal schaffen.

7. Vorrichtung nach einem der Ansprüche 1 bis 8, dadurch gekennzeichnet, daß die Stromschienen (2 bis 11) eine Flächenvergrößerung (14) aufweisen.

8. Vorrichtung nach Anspruch 7, dadurch gekennzeichnet, daß die Flächenvergrößerung (14) quadratisch ist.

9. Vorrichtung nach einem der Ansprüche 1 bis 8, dadurch gekennzeichnet, daß die Stromschienen (2 bis 11) in dem aus dem Gehäuse (41) herausgeführten Bereich abwechselnd abgekröpft sind.

10. Vorrichtung nach einem der Ansprüche 1 bis 9, dadurch gekennzeichnet, daß die Isolierscheiben (15 bis 20) eine Aussparung (31) für Dichtungsmittel aufweisen.
